# EUROPÄISCHE PATENTSCHRIFT

(11) **EP 3 592 491 B1**
(45) Veröffentlichungstag und Bekanntmachung des Hinweises auf die Patenterteilung: **12.08.2020**
(21) Anmeldenummer: 18710044.1
(22) Anmeldetag: 08.03.2018
(51) Int. Cl.: B23F 21/00, B23F 19/10, B23C 5/10

(54) **WERKZEUG, MASCHINE UND VERFAHREN ZUM ERZEUGEN VON DACHFIRSTARTIGEN ANSPITZUNGEN AN ZÄHNEN EINES INNEN- UND AUSSENVERZAHNTEN ZAHNRADS**
TOOL, MACHINE AND METHOD FOR CREATING RIDGE-LIKE SHARPENED POINTS ON TEETH OF A TOOTHED WHEEL HAVING INNER AND OUTER TEETH
OUTIL, MACHINE ET PROCÉDÉ POUR LA RÉALISATION DE POINTES EN FORME DE FAÎTE DE TOIT AU NIVEAU DE DENTS D'UNE ROUE DENTÉE À DENTURE INTÉRIEURE ET EXTÉRIEURE

(30) Priorität: 09.03.2017 DE 102017105032
(43) Veröffentlichungstag der Anmeldung: 15.01.2020
(73) Patentinhaber: Präwema Antriebstechnik GmbH, 37269 Eschwege/Werra (DE)
(72) Erfinder: SCHIEKE, Jörg, 99092 Erfurt-Marbach (DE); HOLDERBEIN, Walter, D-37269 Eschwege (DE)
(74) Vertreter: Cohausz & Florack
(86) Internationale Anmeldenummer: PCT/EP2018/055811
(87) Internationale Veröffentlichungsnummer: WO 2018/162663

(56) Entgegenhaltungen:
- DE-A1- 19 518 483
- DE-A1-102005 042 735
- DE-A1-102015 104 242
- DE-A1-102015 120 556
- DE-U1-202007 006 751
- DE-U1-202013 009 805

## Beschreibung

Die Erfindung betrifft ein Werkzeug zum Erzeugen von dachfirstartigen Anspitzungen an Zähnen eines innen- und außenverzahnten Zahnrads. Derartige Werkzeuge weisen üblicherweise einen fingerartigen Werkzeugträger mit einem Halteabschnitt auf, der einer Stirnfläche des Werkzeugträgers zugeordnet und für die Befestigung in einer Werkzeugaufnahme einer Werkzeugmaschine vorgesehen ist. Darüber hinaus umfassen derartige Werkzeuge auch mindestens ein Anspitzwerkzeug, das am der anderen Stirnfläche zugeordneten Endabschnitt des Werkzeugträgers gehalten ist und im Gebrauch mit seiner Schneidkante einen Schlagkreis beschreibt, dessen Durchmesser durch den radialen Abstand der Schneidkante des Anspitzwerkzeugs von der Rotationsachse des Werkzeugs bestimmt ist, wobei in einem Mittelabschnitt des Werkzeugträgers, der gegenüber dem mit dem Anspitzwerkzeug versehenen Endabschnitt in Richtung des Halteabschnitts des Werkzeugträgers versetzt angeordnet ist, mindestens ein weiteres Anspitzwerkzeug befestigt ist, das mit seiner Schneidkante in einem radialen Abstand zur Rotationsachse des Werkzeugs gehalten ist, der größer ist als der radiale Abstand der Schneidkante des an dem Endabschnitt des Werkzeughalters gehaltenen Anspitzwerkzeugs. Ein derartiges Werkzeug gemäß dem Oberbegriff des Anspruchs ist aus dem Dokument DE 20 2007 006 751 U1 bekannt.

Die Erfindung betrifft auch eine Werkzeugmaschine gemäß dem Oberbegriff des unabhängigen Anspruchs 8 und ein Verfahren zum Erzeugen von dachfirstartigen Anspitzungen an den Zähnen eines innen- und außenverzahnten Zahnrads, in der Werkzeuge der hier in Rede stehenden Art zum Einsatz kommen.

Werkzeuge dieser Art und mit solchen Werkzeugen ausgestattete Maschinen sowie unter Verwendung von derartigen Werkzeugen durchgeführte Verfahren sind in verschiedenen Ausführungen bekannt. Sie dienen dazu, an den Stirnflächen von beispielsweise als Synchronringe oder Schiebemuffen in Kraftfahrzeuggetrieben dienenden innen- und außenverzahnten Zahnrädern in Richtung der jeweiligen Stirnfläche spitz aufeinander zulaufende Schrägen zu erzeugen, in der Fachsprache "dachfirstförmige Anspitzungen" oder auch "Abdachungen" genannt. Durch die derart spitz zulaufende Form wird beim Schaltvorgang das Einführen der Zähne in die Verzahnung des Zahnrads erleichtert, mit der die entsprechend angespitzte Verzahnung in Eingriff gebracht werden soll.

Beispielsweise ist aus der DE 195 18 483 C2 eine Werkzeugmaschine bekannt, die zum Herstellen von derartigen dachfirstartigen Anspitzungen (Schalterleichterungen) an den Stirnflächen der Zähne von Zahnrädern im Synchronverfahren mit zwei fingerartig geformten Werkzeugen, dort "Schlagmesserfräser" genannt, dient. Die Werkzeuge sind unabhängig voneinander in drei Koordinatenachsen und um mindestens eine weitere eigene Achse verschwenkbar. Um einerseits zu einer hohen Fräsleistung zu kommen und andererseits einen nicht zu vermeidenden Grat nur am Dachfirst einer jeden Anspitzung entstehen zu lassen, wo die Beseitigung des Grates durch gegenläufiges Überschneiden erfolgt, ist vorgesehen, dass jedes Werkzeug mit mindestens zwei symmetrisch um dessen Drehachse angeordneten Anspitzwerkzeugen, dort "Schlagmesser" genannt, bestückt ist, die jeweils am dem zu bearbeitenden Werkstück zugeordneten Endabschnitt des Werkzeugs sitzen. Dabei können die Anspitzwerkzeuge gegenüber der Werkstückspindel aufgrund ihrer individuellen Einstellbarkeit in verschiedenen Achsen und um verschiedene Schwenkachsen so eingestellt werden, dass die einzelnen Schlagmesser eines jeden Schlagmesserfräsers nacheinander an verschiedenen Zähnen zum Schnitt kommen und nur aus der Zahnlücke heraus fräsen.

Bei der aus der DE 10 2011 050 499 A1 bekannten Maschine zur spanabhebenden Bearbeitung von Zahnrädern ist im Mittelabschnitt eines von einem Spindelantrieb drehangetriebenen Werkzeugträgers ein erstes Schneidkantenwerkzeug vorgesehen, dass zur Erzeugung von Hinterlegungen oder Rastnuten in den seitlichen Zahnflanken der Zähne des zu bearbeitenden Zahnrads dient. Zusätzlich ist einem in Achsrichtung der Werkzeugspindel gegenüber dem ersten Schneidkantenwerkzeug in Richtung des Stirnendes des Werkzeugträgers versetzt ein zweites Schneidkantenwerkzeug vorgesehen. Bei diesem zweiten Schneidkantenwerkzeug handelt es sich um ein Abdachwerkzeug, das an der freien Stirnfläche des ersten Werkzeugträgers sitzt. Die Steuerung und die Stelleinrichtungen der bekannten Maschine sind dabei so eingerichtet, dass das derart bestückte Werkzeug einerseits zum Erzeugen von Abdachungen an den Stirnflanken der Zähne des Zahnrades und andererseits zur Erzeugung der Hinterlegungen oder Rastnuten an dem Werkstück positioniert werden kann.

Aus der DE 20 2007 006 751 U1 ist eine Vorrichtung zum Entgraten von Zahnrädern mit einem Entgratmesserkopf, der mehrere radial gerichtete, äquidistant angeordnete Entgratmesser umfasst, bekannt. Zusätzlich weist diese Vorrichtung mehrere Plattenhalter mit jeweils einer Entgratplatte auf, die radial gerichtet und äquidistant angeordnet sind, wobei die Entgratmesser sowie Plattenhalter einander am Umfang abwechseln und in axialer Richtung versetzt angeordnet sind.

Das Anspitzen von Innen- und Außenverzahnungen eines Zahnrads in einer Aufspannung unterscheidet sich von den voranstehend erläuterten bekannten Vorgehensweisen dadurch, dass mit den bekannten Maschinen jeweils entweder eine Innenverzahnung oder eine Außenverzahnung bearbeitet wird. Dabei sind die bekannten Maschinen mit zwei gegenläufig rotierenden Werkzeugen bestückt, deren Drehachsen derart winklig zueinander ausgerichtet sind, dass das eine Werkzeug jeweils die eine und das andere Werkzeug jeweils die andere Fläche der spitzdachförmigen Anspitzung an der Stirnfläche der Zähne der Verzahnung erzeugt. Zur Bearbeitung der Innenverzahnung sind dabei die Werkzeuge üblicherweise zwei zueinander benachbarten Viertelkreisen ("Quadranten") der zu bearbeitenden Verzahnung zugeordnet. Soll nun die Außenverzahnung mit denselben Werkzeugen und unter Beibehaltung derselben Drehrichtungen relativ zum Werkstück angespitzt werden, so müssen dazu die Werkzeuge zu den beiden jeweils gegenüberliegenden Quadranten verschoben werden. Diese Notwendigkeit der Verstellung bedingt einen relativ großen Verfahrweg, welcher trotz der mit dem Verzicht auf eine Umrüstung erzielten Zeitersparnis einen großen Zeitbedarf für die Umstellung zwischen der Bearbeitung der Innen- und Außenverzahnung nach sich zieht. Besonders macht sich dieser Zeitbedarf bei der Bearbeitung von großen Zahnrädern bemerkbar, wie sie beispielsweise für Getriebe von schweren Fahrzeugen, wie Lastkraftwagen und desgleichen, benötigt werden.

Vor diesem Hintergrund hat sich die Aufgabe ergeben, ein Werkzeug zu schaffen, welches bei minimierten Umstellzeiten das Anspitzen von Innen- und Außenverzahnungen an einem Zahnrad mit demselben Werkzeug ermöglicht.

Ebenso sollten eine Maschine und ein Verfahren geschaffen werden, mit denen das Anspitzen der Stirnflächen der Zähne von sowohl innen- als auch außenverzahnten Zahnrädern in minimaler Bearbeitungszeit möglich ist.

Die Erfindung hat diese Aufgaben durch das in Anspruch 1 angegebene Werkzeug, die in Anspruch 8 angegebene Maschine und das in Anspruch 9 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Werkzeug zum Erzeugen von dachfirstartigen Anspitzungen an Zähnen eines innen- und außenverzahnten Zahnrads umfasst demnach in Übereinstimmung mit dem eingangs erläuterten Stand der Technik
- einen fingerartigen Werkzeugträger mit einem Halteabschnitt, welcher der einen Stirnfläche des Werkzeugträgers zugeordnet und für die Befestigung in einer Werkzeugaufnahme einer Werkzeugmaschine vorgesehen ist,
   und
- ein Anspitzwerkzeug, das am der anderen Stirnfläche zugeordneten Endabschnitt des Werkzeugträgers gehalten ist und im Gebrauch mit seiner Schneidkante einen Schlagkreis beschreibt, dessen Durchmesser durch den radialen Abstand der Schneidkante des Anspitzwerkzeugs von der Rotationsachse des Werkzeugs bestimmt ist, wobei in einem Mittelabschnitt des Werkzeugträgers, der gegenüber dem mit dem Anspitzwerkzeug versehenen Endabschnitt in Richtung des Halteabschnitts des Werkzeugträgers versetzt angeordnet ist, mindestens ein weiteres Anspitzwerkzeug befestigt ist, das mit seiner Schneidkante in einem radialen Abstand zur Rotationsachse des Werkzeugs gehalten ist, der größer ist als der radiale Abstand der Schneidkante des an dem Endabschnitt des Werkzeughalters gehaltenen Anspitzwerkzeugs.

Erfindungsgemäß ist nun der radiale Abstand der Schneidkante des am Mittelabschnitt des Werkzeugträgers jeweils befestigten Anspitzwerkzeugs von der Rotationsachse um mindestens das 1,5-fache größer als der radiale Abstand der Schneidkante des jeweils am Endabschnitt des Werkzeugträgers befestigten Anspitzwerkzeugs von der Rotationsachse.

In entsprechender Weise weist eine Maschine zum Erzeugen von dachfirstartigen Anspitzungen an den Zähnen eines innen- und außenverzahnten Zahnrads einen Antrieb, der im Gebrauch das zu bearbeitende Zahnrad um seine Rotationsachse rotierend antreibt, zwei erfindungsgemäß ausgebildete Werkzeuge, mindestens einen Antrieb, der die Werkzeuge im Gebrauch um ihre jeweilige Rotationsachse rotierend antreibt, und Stelleinrichtungen auf, welche zum Verstellen der Werkzeuge zwischen einer ersten Arbeitsposition, in der sie mit ihren an ihren Endabschnitten sitzenden Anspitzwerkzeugen in Eingriff mit den Stirnflächen der einen Zähne des Zahnrads kommen, und einer zweiten Arbeitsposition vorgesehen sind, in der sie mit ihren an ihren Mittelabschnitten sitzenden Anspitzwerkzeugen in Eingriff mit den Stirnflächen der anderen Zähne des Zahnrads kommen.

Das erfindungsgemäße Verfahren zum Erzeugen von dachfirstartigen Anspitzungen an den Stirnflächen der Zähne einer Innen- und einer Außenverzahnung eines innen- und außenverzahnten Zahnrads umfasst in entsprechender Weise folgende Arbeitsschritte:
- Einspannen von zwei Werkzeugen zum Erzeugen von dachfirstartigen Anspitzungen an Zähnen eines innen- und außenverzahnten Zahnrads in jeweils eine Werkzeugaufnahme, wobei die Werkzeuge einen fingerartigen Werkzeugträger mit einem Halteabschnitt, der einer Stirnfläche des Werkzeugträgers zugeordnet und für die Befestigung in einer Werkzeugaufnahme einer Werkzeugmaschine vorgesehen ist, und ein Anspitzwerkzeug umfassen, das am der anderen Stirnfläche zugeordneten Endabschnitt des Werkzeugträgers gehalten ist und im Gebrauch mit seiner Schneidkante einen Schlagkreis beschreibt, dessen Durchmesser durch den radialen Abstand der Schneidkante des Anspitzwerkzeugs von der Rotationsachse des Werkzeugs bestimmt ist, und wobei in einem Mittelabschnitt des Werkzeugträgers, der gegenüber dem mit dem Anspitzwerkzeug versehenen Endabschnitt in Richtung des Halteabschnitts des Werkzeugträgers versetzt angeordnet ist, mindestens ein weiteres Anspitzwerkzeug befestigt ist, das mit seiner Schneidkante in einem radialen Abstand zur Rotationsachse des Werkzeugs gehalten ist, der größer ist als der radiale Abstand der Schneidkante des an dem Endabschnitt des Werkzeughalters gehaltenen Anspitzwerkzeugs;
- Verstellen der Werkzeuge in jeweils eine erste Arbeitsposition, in der sie mit ihren an ihren Endabschnitten sitzenden Anspitzwerkzeugen in Eingriff mit den Stirnflächen der einen Zähne des Zahnrads kommen,
   und
- Verstellen der in ihrer Werkzeugaufnahme verbleibenden Werkzeuge in eine zweite Arbeitsposition, in der sie mit ihren an ihren Mittelabschnitten sitzenden Anspitzwerkzeugen in Eingriff mit den Stirnflächen der anderen Zähne des Zahnrads kommen.

Ein erfindungsgemäßes Werkzeug weist somit mindestens zwei Anspitzwerkzeuge auf. Diese Anspitzwerkzeuge sind einerseits in achsparallel zur Rotationsachse des Werkzeugs ausgerichteter Längsrichtung des Werkzeugträgers versetzt zueinander einerseits an einem stirnseitigen Ende und andererseits an einem Mittelabschnitt des Werkzeugträgers gehalten. Gleichzeitig sind die Anspitzwerkzeuge in Bezug auf die Rotationsachse so unterschiedlich beabstandet positioniert, dass ihre den Materialabtrag an den anzuspitzenden Zahnstirnflächen vornehmenden Schneidkanten auf unterschiedlich großen Schlagkreisen rotieren. Der Durchmesser des Schlagkreises des in Bezug auf das zu bearbeitende Werkstück vorderen, am stirnseitigen Endabschnitt des Werkzeugträgers positionierten Anspitzwerkzeugs ist dabei kleiner als der Durchmesser des Schlagkreises der Schneide des am Mittelabschnitt des Werkzeugs sitzenden Anspitzwerkzeugs.

Durch die erfindungsgemäße Formgebung des Werkzeugs und die besondere erfindungsgemäße Anordnung der Anspitzwerkzeuge muss das Werkzeug, für die Bearbeitung der Innen- und Außenverzahnung nur noch über den geringen Verstellweg bewegt werden, der jeweils erforderlich ist, um die am Endabschnitt und am Mittelabschnitt des Werkzeugträgers sitzenden Anspitzwerkzeuge in die für sie vorgesehene Arbeitsposition am zu bearbeitenden Zahnrad zu bringen. Dieser Verstellweg entspricht im Wesentlichen dem Abstand zwischen den am Endabschnitt und am Mittelabschnitt angeordneten Anspitzwerkzeugen, so dass ein Wechsel zwischen der Bearbeitung der Innen- und Außenverzahnung innerhalb kürzester Zeit vorgenommen werden kann.

Der für die Verstellung der Werkzeuge erforderliche Bauraum ist dabei ebenfalls minimal. Dies erlaubt es, mit Hilfe von erfindungsgemäßen Werkzeugen die Bearbeitung von Außen- und Innenverzahnungen in einer Aufspannung von Werkstück und Werkzeugen auch auf konventionellen, bereits im jeweiligen Betrieb vorhandenen Maschinen zu erledigen, bei denen an sich der Bauraum zu gering ist, welcher für eine Verstellung von konventionellen Werkzeugen zwischen zur Bearbeitung der Innenverzahnung und der der Außenverzahnung jeweils erforderlichen Arbeitsposition benötigt würde,

Wesentlich für diesen verfahrensmäßigen Vorteil der Erfindung ist, dass die erfindungsgemäßen Werkzeuge für die Bearbeitung der Innen- und Außenverzahnung in ihrer einmal eingenommenen Einspannung in der zugeordneten Werkzeugaufnahme der jeweiligen Maschine verbleiben. Bei erfindungsgemäßer Vorgehensweise ist aufgrund der besonderen Formgebung der erfindungsgemäßen Werkzeuge und der erfindungsgemäßen Anordnung der Anspitzwerkzeuge bei einem Wechsel von der Bearbeitung der Außenverzahnung zur Bearbeitung der Innenverzahnung weder ein Wechsel der Werkzeuge selbst, noch ein Wechsel ihrer Einspannung in der Maschine erforderlich. Stattdessen kann die zwischen den Arbeitspositionen erforderliche Änderung der Lage und Ausrichtung der Werkzeuge alleine mit den auf konventionellen Anspitzmaschinen vorhandenen Stellmöglichkeiten bewältigt werden.

Im Fall einer erfindungsgemäßen Maschine können dazu die dort vorgesehenen mindestens zwei Werkzeuge und ihre Rotationsachsen in Bezug auf das zu bearbeitende Zahnrad derart positioniert und ausgerichtet sein, dass die Werkzeuge in ihrer ersten Arbeitsposition mit ihren an ihren Endabschnitten sitzenden Anspitzwerkzeugen mit den Stirnflächen der Zähne der Innenverzahnung des Zahnrads in Eingriff kommen und in ihrer zweiten Arbeitsposition mit ihren an ihren Mittelabschnitten sitzenden Anspitzwerkzeugen mit den Stirnflächen der Zähne der Außenverzahnung in Eingriff kommen.

Umgekehrt ist es aber genauso auch möglich, die Werkzeuge und ihre Rotationsachsen in Bezug auf das zu bearbeitende Zahnrad derart zu positionieren und auszurichten, dass die Werkzeuge in ihrer ersten Arbeitsposition mit ihren an ihren Endabschnitten sitzenden Anspitzwerkzeugen mit den Stirnflächen der Zähne der Außenverzahnung des Zahnrads in Eingriff kommen und in ihrer zweiten Arbeitsposition mit ihren an ihren Mittelabschnitten sitzenden Anspitzwerkzeugen mit den Stirnflächen der Zähne der Innenverzahnung in Eingriff kommen.

Der Umstand, dass sich bei einem erfindungsgemäßen Werkzeug das am stirnseitigen Ende vorgesehene Anspitzwerkzeug im Gebrauch auf einem kleineren Schlagkreis um die Rotationsachse des Werkzeugs bewegt als das im Bereich des Mittelabschnitts vorgesehene Anspitzwerkzeug, ergibt dabei eine Formgebung, durch die eine auf kurzem Wege erfolgende Verstellung des jeweiligen Werkzeugs zwischen seinen Arbeitspositionen ohne die Gefahr einer Kollision mit dem zu bearbeitenden Zahnrad gesichert ist.

Dementsprechend können die Werkzeuge in einer erfindungsgemäßen Maschine problemlos so bewegt werden, dass sie in ihrer zweiten Arbeitsposition demselben Viertelkreis der Innen- und Außenverzahnung des zu bearbeitenden Zahnrads zugeordnet sind wie in ihrer ersten Arbeitsposition.

Das Zurückbleiben von Graten kann auch bei den erfindungsgemäß an ihren Stirnflächen angespitzten Zahnrädern dadurch vermieden werden, dass die Werkzeuge bei der Anspitzbearbeitung gegenläufig zueinander jeweils derart rotiert werden, dass sie aus einer der Zahnlücken, die den jeweils bearbeiteten Zahn begrenzen, heraus in Richtung des jeweiligen Firsts der zu erzeugenden Anspitzung bewegt werden, d.h. zuerst die von ihnen zu bearbeitende Dachfläche der dachförmigen Anspitzung formen und dann am Dachfirst der Anspitzung aus dem Material des jeweils bearbeiteten Zahns wieder austreten.

Um dies bei der Bearbeitung der Stirnflächen der Zähne sowohl der Innen- als auch der Außenverzahnung zu erreichen, wird zweckmäßigerweise die Drehrichtung der Werkzeuge bei der Bearbeitung der Stirnflächen der Zähne der Innen- und der Außenverzahnung jeweils so gewählt, dass sie bei der Bearbeitung der Innenverzahnung entgegengesetzt zur Drehrichtung bei der Bearbeitung der Außenverzahnung ist.

Die für die Bearbeitung der Innen- und der Außenverzahnung jeweils vorgesehenen Anspitzwerkzeuge werden bei einem erfindungsgemäßen Werkzeug demgemäß zweckmäßigerweise in Bezug auf die Rotationsachse des Werkzeugs so angeordnet, dass die Schneidkante des für die Bearbeitung der Innenverzahnung jeweils vorgesehenen Anspitzwerkzeugs in Umfangsrichtung betrachtet entgegengesetzt zur Schneidkante des jeweils für die Bearbeitung der Außenverzahnung vorgesehenen Anspitzwerkzeugs ausgerichtet ist.

Ein erfindungsgemäßes Werkzeug ist insbesondere im Hinblick auf die Vermeidung einer Kollision mit dem Zahnrad während der Verstellung zwischen den Arbeitspositionen unter Berücksichtigung der in bekannten Werkzeugmaschinen üblichen Ausrichtung der Rotationsachsen des Werkzeugs dadurch gekennzeichnet, dass der radiale Abstand der Schneidkante des am Mittelabschnitt des Werkzeugträgers jeweils befestigten Anspitzwerkzeugs von der Rotationsachse um mindestens das 1,5-fache, insbesondere um mindestens das 2-fache, größer ist als der radiale Abstand der Schneidkante des jeweils am Endabschnitt des Werkzeugträgers befestigten Anspitzwerkzeugs von der Rotationsachse.

Grundsätzlich kann der das weitere Anspitzwerkzeug tragende Mittelabschnitt des Werkzeugträgers in jeder geeigneten Weise gefertigt sein, welche eine ausreichende Abstützung des Anspitzwerkzeugs an dem Werkzeugträger im erfindungsgemäß vorgesehenen Abstand zur Rotationsachse des Werkzeugs sicherstellt. Insbesondere im Fall, dass der Werkzeugträger aus einem Vollmaterial gefertigt ist, bietet es sich hierzu an, den Mittelabschnitt als Absatz auszubilden, an dem ein Sitz für das weitere Anspitzwerkzeug vorhanden ist.

Im Hinblick auf die Freiheit der Verstellbarkeit eines erfindungsgemäßen Werkzeugs ist es günstig, wenn der achsparallel zur Rotationsachse gemessene Abstand zwischen der Schneidkante des am Endabschnitt gehaltenen Anspitzwerkzeugs und der Schneidkante des am Mittelabschnitt gehaltenen Anspitzwerkzeugs mindestens 30 % des ebenfalls achsparallel zur Rotationsachse gemessenen Abstands zwischen dem dem Mittelabschnitt zugeordneten Ende des Halteabschnitts und der dem Endabschnitt zugeordneten Stirnfläche des Werkzeugträgers entspricht.

Als "Abstand der Schneidkanten" ist hier der jeweilige Abstand zwischen den Mitten der Schneidkanten betrachtet, die jeweils vermessen werden.

Besonders zeiteffizient lässt sich die jeweilige Anspitzbearbeitung mit einem erfindungsgemäßen Werkzeug durchführen, wenn an dem Endabschnitt und/oder an dem Mittelabschnitt des Werkzeugträgers jeweils mindestens zwei Anspitzwerkzeuge befestigt sind. Dabei ergibt sich eine besonders einfache Möglichkeit der Synchronisierung der Drehbewegungen der jeweils eingesetzten Werkzeuge und des zu bearbeitenden Zahnrads dann, wenn die dem Mittelabschnitt und/oder dem Endabschnitt zugeordneten Anspitzwerkzeuge in radialer Richtung bezogen auf die Rotationsachse des Werkzeugs einander gegenüberliegend angeordnet sind.

Als Anspitzwerkzeug für ein erfindungsgemäßes Werkzeug eignen sich insbesondere aus dem Stand der Technik für diesen Zweck hinlänglich bekannte und bewährte Schneidplatten, die aus geeigneten Hartmetallwerkstoffen bestehen und bei Verschleiß auf einfache Weise ausgetauscht werden können.

Nachfolgend wird die Erfindung anhand einer Ausführungsbeispiele darstellenden Zeichnung näher erläutert. Deren Figuren zeigen jeweils schematisch:
- Fig. 1a: ein erstes Werkzeug zum Anspitzen der Stirnflächen von Zähnen eines innen- und außenverzahnten Zahnrads;
- Fig. 1b: das Werkzeug gemäß Fig. 1a in einer frontalen Ansicht auf seine eine Stirnseite;
- Fig. 1c: ein zweites Werkzeug zum Anspitzen der Stirnflächen von Zähnen eines innen- und außenverzahnten Zahnrads;
- Fig. 1d: das Werkzeug gemäß Fig. 1c in einer frontalen Ansicht auf seine eine Stirnseite;
- Fig. 2a: ein gemäß den Figuren 1a und 1b und ein gemäß Fig. 1c ausgebildetes Werkzeug beim Anspitzen der Stirnflächen von Zähnen der Außenverzahnung eines Zahnrads in perspektivischer, vereinfachter Ansicht;
- Fig. 2b: die Werkzeuge gemäß Fig. 2a beim Anspitzen der Stirnflächen von Zähnen der Innenverzahnung eines Zahnrads in perspektivischer, vereinfachter Ansicht;
- Fig. 3a: ein Werkzeug gemäß Fig. 2a beim Anspitzen der Stirnflächen von Zähnen der Außenverzahnung eines Zahnrads in seitlicher, teilweise längsgeschnittener Ansicht;
- Fig. 3b: das Werkzeug gemäß Fig. 2b beim Anspitzen der Stirnflächen von Zähnen der Innenverzahnung eines Zahnrads in seitlicher, teilweise längsgeschnittener Ansicht;
- Fig. 4a: ein Werkzeug gemäß Fig. 2a in einer zu den Figuren 2a,3a alternativen Anordnung beim Anspitzen der Stirnflächen von Zähnen der Außenverzahnung eines Zahnrads in seitlicher, teilweise längsgeschnittener Ansicht;
- Fig. 4b: das Werkzeug gemäß Fig. 4a beim Anspitzen der Stirnflächen von Zähnen der Innenverzahnung eines Zahnrads in seitlicher, teilweise längsgeschnittener Ansicht.

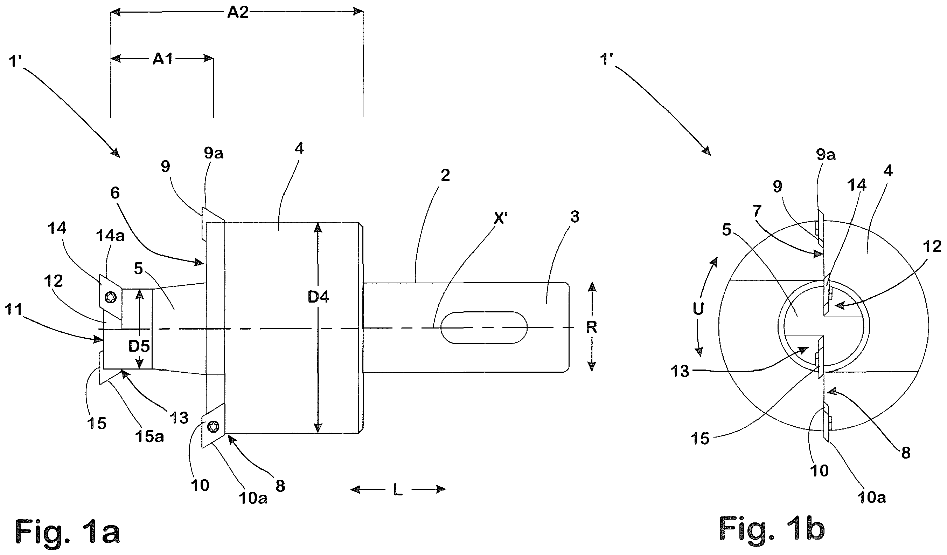

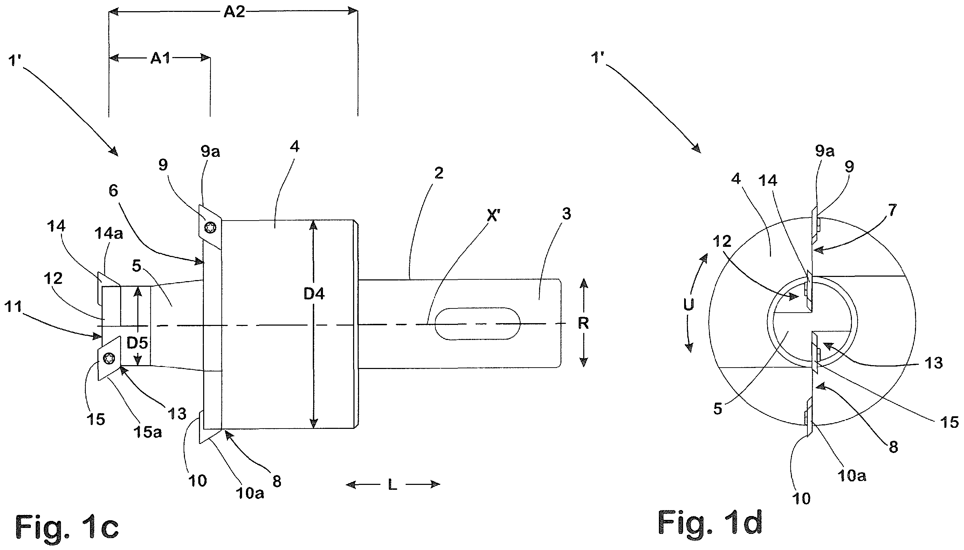

Die in Fig. 1a - 1c dargestellten Werkzeuge 1',1" umfassen jeweils einen aus einem Stahlvollmaterial durch spanabhebende Bearbeitung hergestellten Werkzeugträger 2, der in seiner achsparallel zur Rotationsachse X',X" des jeweiligen Werkzeugs 1',1" ausgerichteten Längsrichtung L in drei koaxiale zur Rotationsachse X',X" ausgerichtete Abschnitte, nämlich einen Halteabschnitt 3, einen Mittelabschnitt 4 und einen Endabschnitt 5, unterteilt ist.

Der Halteabschnitt 3 ist dabei nach Art eines zylindrischen Zapfens so ausgebildet, dass er in eine korrespondierend geformte, hier nicht zeigte Aufnahme eines Werkzeugsupports eingeführt und dort in an sich bekannter Weise gehalten ist.

An den Halteabschnitt 3 schließt sich der als zylinderscheibenförmiger Absatz ausgebildete Mittelabschnitt 4 an. In dessen Umfangsfläche sind angrenzend an die vom Halteabschnitt 3 abgewandte Stirnfläche 6 des Mittelabschnitts 4 zwei Sitze 7,8 für jeweils ein Anspitzwerkzeug 9,10 ausgebildet. Die Anspitzwerkzeuge 9,10 sind dabei so positioniert, dass ihre radial nach außen gerichteten Schneidkanten 9a,10a in radialer Richtung R bezogen auf die jeweilige Rotationsachse X',X" der Werkzeuge 1',1" einander gegenüberliegend und in Bezug auf die jeweilige Rotationsachse X',X" punktsymmetrisch angeordnet sind (Fig. 1b). Dabei sind die Aufnahmen 7,8 und die Anspitzwerkzeuge 9,10 des Werkzeugs 1' in Bezug auf die Rotationsachse X',X" spiegelsymmetrisch zu den Aufnahmen 12,13 und den Anspitzwerkzeugen 9,10 des Werkzeugs 1" angeordnet, so dass in Umfangsrichtung U gesehen die Schneidkanten 9a,10a der Anspitzwerkzeuge 9,10 des Werkzeugs 1' entgegengesetzt zu den Schneidkanten 9a,10a der Anspitzwerkzeuge 9,10 des Werkzeugs 1" ausgerichtet sind.

Der in seiner Grundform zylindrische Endabschnitt 5 stößt mit seinem dem Halteabschnitt 3 zugewandten Ende gegen die Stirnfläche 6 des Mittelabschnitts 4. Der Durchmesser D4 des Mittelabschnitts 4 ist um etwa das 2,3-fache größer als der Durchmesser D5 des Endabschnitts 5.

Wie beim Mittelabschnitt 4 sind in die Umfangsfläche des Endabschnitts 5 angrenzend an die vom Halteabschnitt 3 abgewandte Stirnfläche 11 des Endabschnitts 5 zwei Sitze 12,13 für jeweils ein Anspitzwerkzeug 14,15 ausgebildet. Die Anspitzwerkzeuge 14,15 sind dabei ebenfalls so positioniert, dass ihre radial nach außen gerichteten Schneidkanten 14a,15a in radialer Richtung R bezogen auf die Rotationsachse X',X" des Werkzeugs 1 einander gegenüberliegend angeordnet sind. Auch hier sind die Aufnahmen 12,13 und die Anspitzwerkzeuge 14,15 des Werkzeugs 1' in Bezug auf die Rotationsachsen X',X" spiegelsymmetrisch zu den Aufnahmen 12,13 und den Anspitzwerkzeugen 14,15 des Werkzeugs 1" angeordnet, so dass in Umfangsrichtung U gesehen die Schneidkanten 14a,15a der Anspitzwerkzeuge 14,15 des Werkzeugs 1' entgegengesetzt zu den Schneidkanten 14a,15a der Anspitzwerkzeuge 14,15 des Werkzeugs 1" ausgerichtet sind.

Dem Verhältnis der Durchmesser D4,D5 von Mittelabschnitt 4 und Endabschnitt 5 entsprechend rotieren die Schneidkanten 9a,10a der am Mittelabschnitt 4 sitzenden Anspitzwerkzeuge 9,10 auf einem Schlagkreis S9,10, dessen Radius R9,10 um das 2,3-fache größer ist als der Radius R14,15 des Schlagkreises S14,15.

Gleichzeitig beträgt der achsparallel zur Rotationsachse X',X" gemessene Abstand A1 zwischen den Schneidkanten 9a,10a der am Endabschnitt 5 gehaltenen Anspitzwerkzeuge 9,10 einerseits und den Schneidkanten 14a,15a der am Mittelabschnitt 4 gehaltenen Anspitzwerkzeuge 14,15 andererseits etwa 40 % des ebenfalls achsparallel zur Rotationsachse gemessenen Abstands A2 zwischen dem dem Mittelabschnitt 4 zugeordneten Ende des Halteabschnitts 3 und der vom Halteabschnitt 3 abgewandten Stirnfläche 11 des Endabschnitts 5 des Werkzeugträgers 2.

Bei den Anspitzwerkzeugen 9,10,14,15 handelt es sich um konventionelle, für diesen Zweck handelsübliche Schneidplatten, die in ebenfalls bekannter Weise an dem ihnen jeweils zugeordneten Sitz 7,8,12,13 an dem Mittelabschnitt 4 und dem Endabschnitt 5 befestigt sind.

Zum Anspitzen der Stirnflächen 20 der Zähne 21 der Innenverzahnung 22 und der Stirnflächen 23 der Zähne 24 der Außenverzahnung 25 eines innen- und außenverzahnten, ringförmigen Zahnrads 26 werden in einer hier weiter nicht gezeigten Werkzeugmaschine, die in an sich bekannter Weise für diese Zwecke hergerichtet ist, zwei Werkzeuge 1',1" eingesetzt.

Die Rotationsachsen X',X" der beiden Werkzeuge 1',1" werden dabei so ausgerichtet, dass sie sich bei Projektion in eine Horizontalebene in Verlängerung über die Endabschnitte 5 der Werkzeuge 1',1" hinaus unter einem spitzen Winkel treffen.

Gleichzeitig sind die Werkzeuge 1',1" in Bezug auf die ihnen zugewandte Stirnfläche 27 des Zahnrads 26 so ausgerichtet, dass sich ihre Halteabschnitte 3 jeweils gegenüberliegend zur Stirnfläche 27 befinden und in eine nach oben gerichtete Richtung weg von der Stirnfläche 27 weisen. Dabei ist das eine Werkzeug 1' dem dritten Viertelkreis V3 und das andere Werkzeug 1" dem vierten Viertelkreis V4 des von dem Zahnrad 26 umgrenzten Kreises zugeordnet.

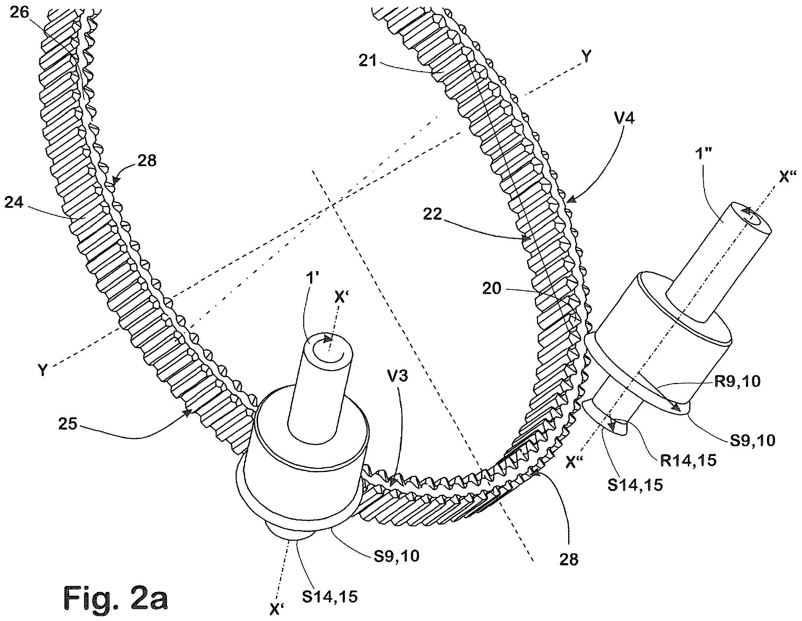

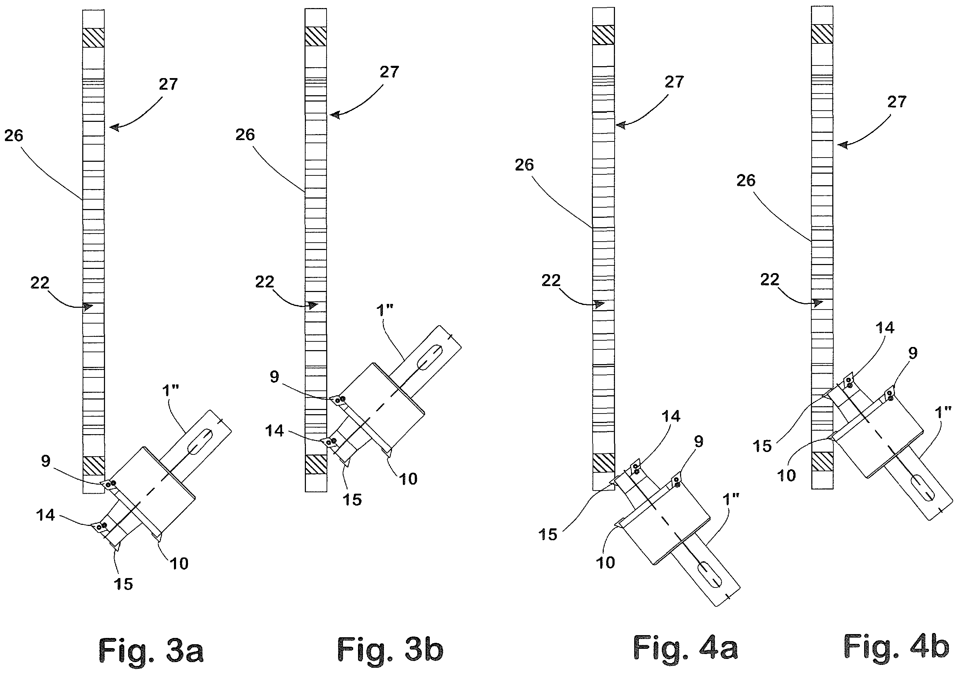

Zum Anspitzen der Stirnflächen 23 der Zähne 24 der Außenverzahnung 25 werden die Werkzeuge 1',1" so an das Zahnrad 26 bewegt, dass die an ihrem Mittelabschnitt 4 jeweils sitzenden Anspitzwerkzeuge 14,15 mit ihren Schneidkanten 14a,15a mit jeder Umdrehung um ihre Rotationsachse X',X" in das Material des jeweils bearbeiteten Zahns 24 eintauchen. Dabei steht der Endabschnitt 5 der Werkzeuge 1',1" mit den an ihm befestigten Anspitzwerkzeugen 14,15 frei in den seitlich oder unterhalb des Zahnrads 26 vorhandenen Raum (Fig. 2a,3a).

Das Anspitzen der Stirnflächen 23 erfolgt nun in an sich bekannter Weise in einem kontinuierlichen Ablauf bei konstant gegenläufig rotierenden Werkzeugen 1',1" und ebenso konstant um seine Drehachse Y rotierendem Zahnrad 26, wobei die Drehbewegungen der Werkzeuge 1',1" und des Zahnrads 26 sowie alle weiteren für eine ordnungsgemäße Erzeugung der Anspitzungen 28 gegebenenfalls erforderlichen Relativbewegungen zwischen den Werkzeugen 1',1" und dem Zahnrad 26 in an sich bekannter Weise über eine hier nicht gezeigte Steuerung synchronisiert werden.

Nach einer ausreichenden Anzahl von Umläufen des Zahnrads 26 sind die dachfirstförmigen Anspitzungen 28 an den Stirnflächen 23 der Zähne 24 fertig hergestellt.

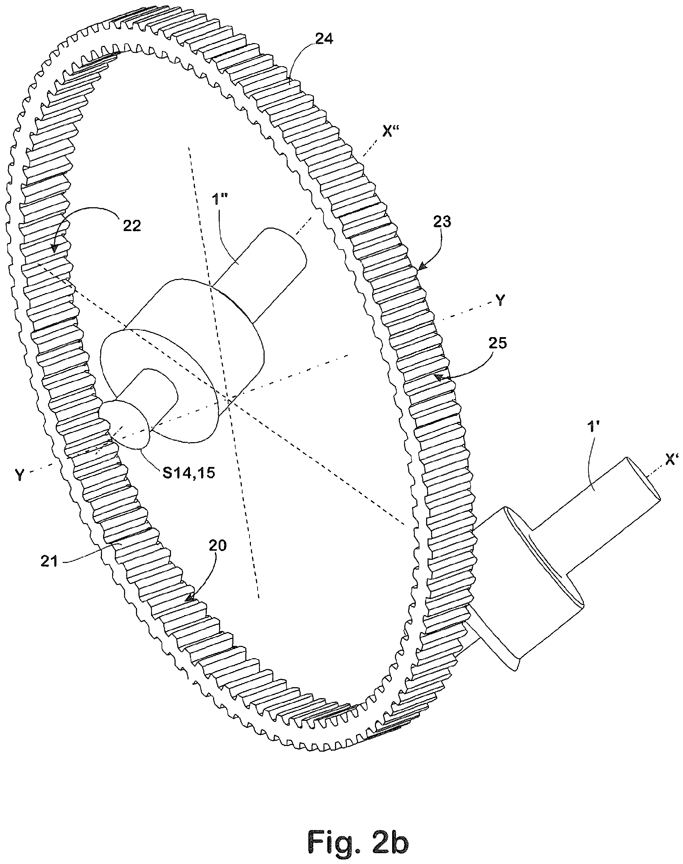

Nun werden die Werkzeuge 1',1" wiederum im Bereich der Viertelkreise V3,V4 so positioniert, dass sie mit den Schneidkanten 14a, 15a der an ihren Endabschnitten 5 sitzenden Anspitzwerkzeuge 14,15 in spanabhebenden Eingriff mit den Stirnflächen 20 der Zähne 21 der Innenverzahnung 22 kommen (Fig. 2b,3b). Die Mittelabschnitte 4 der Werkzeuge 1',1" stehen dabei mit den von ihnen getragenen Anspitzwerkzeugen 9,10 im freien Raum vor der Stirnseite 27 des Zahnrads 26, so dass auch eine Kollision der Anspitzwerkzeuge 9,10 mit dem Zahnrad 26 während der Anspitzbearbeitung der Zähne 21 der Innenverzahnung 22 sicher ausgeschlossen ist.

Die Anspitzbearbeitung der Zähne 21 der Innenverzahnung 22 erfolgt dann entsprechend der bereits für die Anspitzbearbeitung der Zähne 24 der Außenverzahnung 25 beschriebenen und aus dem Stand der Technik an sich bekannten Vorgehensweise.

Die Figuren 4a,4b zeigen eine alternative Möglichkeit der Nutzung von erfindungsgemäß ausgebildeten Werkzeugen 1',1". Anders als bei dem in den Figuren 2a - 3b dargestellten Beispielen sind hier die Werkzeuge 1',1" derart ausgerichtet, dass ihre Halteabschnitte 3 nach unten von der Stirnseite 27 des Zahnrads 26 weg weisen. Bei dieser Anordnung erfolgt die Anspitzbearbeitung der Stirnflächen 23 der Zähne 24 der Außenverzahnung 25 mit den am Endabschnitt 5 der Werkzeuge 1',1" angeordneten Anspitzwerkzeugen 14,15, wogegen - nach einer entsprechenden Verstellung der Werkzeuge 1',1" - die Bearbeitung der Stirnflächen 20 der Zähne 21 der Innenverzahnung 22 durch die am Mittelabschnitt 4 der Werkzeuge 1',1" gehaltenen Anspitzwerkzeuge 9,10 erfolgt.

Unabhängig davon, welche der beiden Ausrichtungen der Werkzeuge 1',1" gewählt wird, ist es somit bei erfindungsgemäßer Ausgestaltung der Werkzeuge 1',1" möglich, bei kleinsten Verstellwegen und damit einhergehend minimalem Zeitaufwand für die Verstellung der Werkzeuge 1',1" die Zähne 21,24 der Innen- und Außenverzahnung 22,25 des Zahnrads 26 auch dann in kürzester Zeit zu erledigen, wenn das Zahnrad 26 einen großen Durchmesser aufweist.

### BEZUGSZEICHEN

- 1',1": Werkzeug zum Anspitzen der Stirnflächen 20,23 der Zähne 21,24 des innen- und außenverzahnten Zahnrads 26
- 2: Werkzeugträger der Werkzeuge 1',1"
- 3: Halteabschnitt der Werkzeuge 1',1"
- 4: Mittelabschnitt der Werkzeuge 1',1"
- 5: Endabschnitt der Werkzeuge 1',1"
- 6: Stirnfläche des Mittelabschnitts 4
- 7,8: Sitze für jeweils ein Anspitzwerkzeug 9,10
- 9,10: Anspitzwerkzeuge
- 9a,10a: Schneidkanten der Anspitzwerkzeuge 9,10
- 11: Stirnfläche des Endabschnitts 5
- 12,13: Sitze für jeweils ein Anspitzwerkzeug 14,15
- 14,15: Anspitzwerkzeuge
- 14a,15a: Schneidkanten der Anspitzwerkzeuge 14,15
- 20: Stirnflächen der Zähne 21
- 21: Zähne der Innenverzahnung 22
- 22: Innenverzahnung des Zahnrads 26
- 23: Stirnflächen der Zähne 24
- 24: Zähne der Außenverzahnung 25
- 25: Außenverzahnung des Zahnrads 26
- 26: innen- und außenverzahntes Zahnrad
- 27: Stirnseite des Zahnrads 26
- 28: dachfirstförmige Anspitzungen

- A1: Abstand zwischen den Schneidkanten 9a, 10a der am Endabschnitt 5 gehaltenen Anspitzwerkzeuge 9,10 einerseits und den Schneidkanten 14a,15a der am Mittelabschnitt 4 gehaltenen Anspitzwerkzeuge 14a, 15 andererseits
- A2: Abstand zwischen dem dem Mittelabschnitt 4 zugeordneten Ende des Halteabschnitts 3 und der vom Halteabschnitt 3 abgewandten Stirnfläche 11 des Endabschnitts 5 des Werkzeugträgers 2
- D4: Durchmesser des Mittelabschnitts 4
- D5: Durchmesser des Endabschnitts 5
- L: Längsrichtung der Werkzeuge 1', 1"
- R: radiale Richtung
- R9,10: Radius des Schlagkreises S9,10
- R14,15: Radius des Schlagkreises S14,15
- S9,10: Schlagkreis der Anspitzwerkzeuge 9,10
- S14,15: Schlagkreis der Anspitzwerkzeuge 14,15
- U: Umfangsrichtung
- V3,V4: Viertelkreise (Quadranten) des vom Zahnrad 26 umgrenzten Kreises
- X',X": Rotationsachsen der Werkzeuge 1',1"
- Y: Drehachse des Zahnrads 26

## Patentansprüche

1. Werkzeug zum Erzeugen von dachfirstartigen Anspitzungen (28) an Zähnen (21,24) eines innen- und außenverzahnten Zahnrads (26), wobei das Werkzeug (1 ',1")
- einen fingerartigen Werkzeugträger (2) mit einem Halteabschnitt (3), der einer Stirnfläche des Werkzeugträgers (2) zugeordnet und für die Befestigung in einer Werkzeugaufnahme einer Werkzeugmaschine vorgesehen ist,
und
- ein Anspitzwerkzeug (14,15) umfasst, das am der anderen Stirnfläche zugeordneten Endabschnitt (5) des Werkzeugträgers (2) gehalten ist und im Gebrauch mit seiner Schneidkante (14a,15a) einen Schlagkreis (S14,15) beschreibt, dessen Durchmesser durch den radialen Abstand der Schneidkante (14a,15a) des Anspitzwerkzeugs (14,15) von der Rotationsachse (X',X") des Werkzeugs (2) bestimmt ist,
wobei in einem Mittelabschnitt (4) des Werkzeugträgers (2), der gegenüber dem mit dem Anspitzwerkzeug (14,15) versehenen Endabschnitt (5) in Richtung des Halteabschnitts (3) des Werkzeugträgers (2) versetzt angeordnet ist, mindestens ein weiteres Anspitzwerkzeug (9,10) befestigt ist, das mit seiner Schneidkante (9a,10a) in einem radialen Abstand zur Rotationsachse (X',X") des Werkzeugs (1) gehalten ist, der größer ist als der radiale Abstand der Schneidkante (14a,15a) des an dem Endabschnitt (5) des Werkzeughalters (2) gehaltenen Anspitzwerkzeugs (14,15)
**dadurch gekennzeichnet, dass**
der radiale Abstand der Schneidkante (9a,10a) des am Mittelabschnitt (4) des Werkzeugträgers (2) jeweils befestigten Anspitzwerkzeugs (9,10) von der Rotationsachse (X',X") um mindestens das 1,5-fache größer ist als der radiale Abstand der Schneidkante (14a, 15a) des jeweils am Endabschnitt (5) des Werkzeugträgers (2) befestigten Anspitzwerkzeugs (14,15) von der Rotationsachse (X',X").

2. Werkzeug nach Anspruch 1,**dadurch gekennzeichnet, dass** der Mittelabschnitt (4) als Absatz ausgebildet ist, an dem ein Sitz für das weitere Anspitzwerkzeug (9,10) vorhanden ist.

3. Werkzeug nach einem der voranstehenden Ansprüche, **dadurch gekennzeichnet,dass** der achsparallel zur Rotationsachse (X',X") gemessene Abstand (A1) zwischen der Schneidkante (14a,15a) des am Endabschnitt (5) gehaltenen Anspitzwerkzeugs (14,15) und der Schneidkante (9a,10a) des am Mittelabschnitt (4) gehaltenen Anspitzwerkzeugs (9,10) mindestens 30 % des ebenfalls achsparallel zur Rotationsachse (X',X") gemessenen Abstands (A2) zwischen dem dem Mittelabschnitt (4) zugeordneten Ende des Halteabschnitts (3) und der vom Halteabschnitt (3) abgewandten Stirnfläche des Endabschnitts (5) des Werkzeugträgers (2) entspricht.

4. Werkzeug nach einem der voranstehenden Ansprüche, **dadurch gekennzeichnet, dass** an dem Endabschnitt (5) des Werkzeugträgers (2) mindestens zwei Anspitzwerkzeuge (14,15) befestigt sind.

5. Werkzeug nach einem der voranstehenden Ansprüche, **dadurch gekennzeichnet,dass** an dem Mittelabschnitt (4) mindestens zwei Anspitzwerkzeuge (9,10) befestigt sind.

6. Werkzeug nach Anspruch 3, **dadurch gekennzeichnet, dass** die dem Mittelabschnitt (4) oder dem Endabschnitt (5) zugeordneten Anspitzwerkzeuge (9,10,14,15) in radialer Richtung (R) bezogen auf die Rotationsachse (X',X") des Werkzeugs (1) einander gegenüberliegend angeordnet sind.

7. Werkzeug nach einem der voranstehenden Ansprüche, **dadurch gekennzeichnet, dass** die Anspitzwerkzeuge (9,10,14,15) Schneidplatten sind.

8. Maschine zum Erzeugen von dachfirstartigen Anspitzungen (28) an den Zähnen (21,24) eines innen- und außenverzahnten Zahnrads (26), wobei die Maschine einen Antrieb, der im Gebrauch das zu bearbeitende Zahnrad (26) um seine Drehachse (Y) rotierend antreibt, **dadurch gekennzeichnet dass** die Maschine zwei gemäß einem der voranstehenden Ansprüche ausgebildete Werkzeuge (1 ',1"), mindestens einen Antrieb, der die Werkzeuge (1',1") im Gebrauch um ihre jeweilige Rotationsachse (X',X") rotierend antreibt, und Stelleinrichtungen aufweist, welche zum Verstellen der Werkzeuge (1',1") zwischen einer ersten Arbeitsposition, in der sie mit ihren an ihren Endabschnitten (5) sitzenden Anspitzwerkzeugen (14,15) in Eingriff mit den Stirnflächen (20) der einen Zähne (21) des Zahnrads (26) kommen, und einer zweiten Arbeitsposition vorgesehen sind, in der sie mit ihren an ihren Mittelabschnitten (4) sitzenden Anspitzwerkzeugen (9,10) in Eingriff mit den Stirnflächen (23) der anderen Zähne (24) des Zahnrads (26) kommen.

9. Verfahren zum Erzeugen von dachfirstartigen Anspitzungen (28) an den Stirnflächen (20,23) der Zähne (21,24) einer Innen- und einer Außenverzahnung (22,25) eines innen- und außenverzahnten Zahnrads (26), wobei das Verfahren folgende Arbeitsschritte umfasst:
- Einspannen von zwei Werkzeugen zum Erzeugen von dachfirstartigen Anspitzungen (28) an Zähnen (21,24) eines innen- und außenverzahnten Zahnrads (26) in jeweils eine Werkzeugaufnahme, wobei die Werkzeuge (1',1") einen fingerartigen Werkzeugträger (2) mit einem Halteabschnitt (3), der einer Stirnfläche des Werkzeugträgers (2) zugeordnet und für die Befestigung in einer Werkzeugaufnahme einer Werkzeugmaschine vorgesehen ist, und ein Anspitzwerkzeug (14,15) umfassen, das am der anderen Stirnfläche zugeordneten Endabschnitt (5) des Werkzeugträgers (2) gehalten ist und im Gebrauch mit seiner Schneidkante (14a,15a) einen Schlagkreis (S14,15) beschreibt, dessen Durchmesser durch den radialen Abstand der Schneidkante (14a,15a) des Anspitzwerkzeugs (14,15) von der Rotationsachse (X',X") des Werkzeugs (2) bestimmt ist, und wobei in einem Mittelabschnitt (4) des Werkzeugträgers (2), der gegenüber dem mit dem Anspitzwerkzeug (14,15) versehenen Endabschnitt (5) in Richtung des Halteabschnitts (3) des Werkzeugträgers (2) versetzt angeordnet ist, mindestens ein weiteres Anspitzwerkzeug (9,10) befestigt ist, das mit seiner Schneidkante (9a,10a) in einem radialen Abstand zur Rotationsachse (X',X") des Werkzeugs (1) gehalten ist, der größer ist als der radiale Abstand der Schneidkante (14a,15a) des an dem Endabschnitt (5) des Werkzeughalters (2) gehaltenen Anspitzwerkzeugs (14,15);
- Verstellen der Werkzeuge (1',1") in jeweils eine erste Arbeitsposition, in der sie mit ihren an ihren Endabschnitten (5) sitzenden Anspitzwerkzeugen (14,15) in Eingriff mit den Stirnflächen (20) der einen Zähne (21) des Zahnrads (26) kommen,
und
- Verstellen der in ihrer Werkzeugaufnahme verbleibenden Werkzeuge (1',1") in jeweils eine zweite Arbeitsposition, in der sie mit ihren an ihren Mittelabschnitten (4) sitzenden Anspitzwerkzeugen (9,10) in Eingriff mit den Stirnflächen (23) der anderen Zähne (24) des Zahnrads (26) kommen.

10. Verfahren nach Anspruch 9, **dadurch gekennzeichnet, dass** die Werkzeuge (1 ',1") und ihre Rotationsachsen (X',X") in Bezug auf das zu bearbeitende Zahnrad (26) derart positioniert und ausgerichtet werden, dass die Werkzeuge (1 ',1") in ihrer ersten Arbeitsposition mit ihren an ihren Endabschnitten (5) sitzenden Anspitzwerkzeugen (14,15) mit den Stirnflächen (20) der Zähne (21) der Innenverzahnung (22) des Zahnrads (26) in Eingriff kommen und in ihrer zweiten Arbeitsposition mit ihren an ihren Mittelabschnitten (4) sitzenden Anspitzwerkzeugen (9,10) mit den Stirnflächen (23) der Zähne (24) der Außenverzahnung (25) in Eingriff kommen.

11. Verfahren nach Anspruch 9, **dadurch gekennzeichnet, dass** die Werkzeuge (1 ',1") und ihre Rotationsachsen (X',X") in Bezug auf das zu bearbeitende Zahnrad (26) derart positioniert und ausgerichtet werden, dass die Werkzeuge (1',1") in ihrer ersten Arbeitsposition mit ihren an ihren Endabschnitten (5) sitzenden Anspitzwerkzeugen (14,15) mit den Stirnflächen (23) der Zähne (24) der Außenverzahnung (25) des Zahnrads (26) in Eingriff kommen und in ihrer zweiten Arbeitsposition mit ihren an ihren Mittelabschnitten (4) sitzenden Anspitzwerkzeugen (9,10) mit den Stirnflächen (20) der Zähne (21) der Innenverzahnung (22) in Eingriff kommen.

12. Verfahren nach einem der Ansprüche 9 bis 11, **dadurch gekennzeichnet, dass** die Werkzeuge (1',1")in ihrer zweiten Arbeitsposition demselben Viertelkreis (V3,V4) der Innen- und Außenverzahnung (22,25) des zu bearbeitenden Zahnrads (26) zugeordnet sind wie in ihrer ersten Arbeitsposition.

13. Verfahren nach einem der Ansprüche 9 bis 12, **dadurch gekennzeichnet, dass** die Werkzeuge (1',1") gegenläufig zueinander um ihre Rotationsachse (X',X") rotierend angetrieben werden.

14. Verfahren nach Anspruch 13,**dadurch gekennzeichnet, dass** die Drehrichtung der Werkzeuge (1 ',1") bei der Bearbeitung der Stirnflächen (20) der Zähne (21) der Innenverzahnung (22) jeweils entgegengesetzt zu der Drehrichtung ist, mit der sie bei der Bearbeitung der Stirnflächen (23) der Zähne (24) der Außenverzahnung (25) rotieren.

## Claims

1. Tool for producing roof ridge-shaped chamfers (28) on teeth (21, 24) of an internally and externally toothed gearwheel (26), wherein the tool (1', 1") comprises
- a finger-like tool carrier (2) having a holding section (3) which is associated with an end face of the tool carrier (2) and provided for fastening in a tool holder of a machine tool,
and
- a chamfering tool (14, 15), which is held on the end section (5) of the tool carrier (2) associated with the other end face, and during use describes an impact circle (S14, 15) with its cutting edge (14a, 15a), whose diameter is determined by the radial distance of the cutting edge (14a, 15a) of the chamfering tool (14, 15) from the axis of rotation (X', X") of the tool (2),
wherein at least one further chamfering tool (9, 10) is attached in a middle section (4) of the tool carrier (2), which is offset in the direction of the holding section (3) of the tool carrier (2) relative to the end section (5) provided with the chamfering tool (14, 15),
and
wherein the further chamfering tool (9, 10) is held with its cutting edge (9a, 10a) at a radial distance to the axis of rotation (X', X") of the tool (1), said radial distance being greater than the radial distance of the cutting edge (14a, 15a) of the chamfering tool (14, 15) held on the end section (5) of the tool holder (2), **characterised in that** the radial distance of the cutting edge (9a, 10a) of the chamfering tool (9, 10), attached respectively to the middle section (4) of the tool carrier (2), from the axis of rotation (X', X") is at least 1.5 times greater than the radial distance of the cutting edge (14a, 15a) of the chamfering tool (14, 15), attached respectively to the end section (5) of the tool carrier (2), from the axis of rotation (X', X").

2. Tool according to Claim 1, **characterised in that** the middle section (4) is designed as a ledge, on which a seat for the further chamfering tool (9, 10) is provided.

3. Tool according to any one of the preceding claims, **characterised in that** the distance (A1), measured axially parallel to the axis of rotation (X', X"), between the cutting edge (14a, 15a) of the chamfering tool (14, 15) held on the end section (5) and the cutting edge (9a, 10a) of the chamfering tool (9, 10) held on the middle section (4) is at least 30% of the distance (A2), also measured axially parallel to the axis of rotation (X', X"), between the end of the holding section (3) associated with the middle section (4) and the end face of the end section (5) of the tool carrier (2) remote from the holding section (3).

4. Tool according to any one of the preceding claims, **characterised in that** at least two chamfering tools (14, 15) are fixed to the end section (5) of the tool carrier (2).

5. Tool according to any one of the preceding claims, **characterised in that** at least two chamfering tools (9, 10) are fixed to the middle section (4).

6. Tool according to any one of Claims 3 or 4, **characterised in that** the chamfering tools (9, 10, 14, 15) associated with the middle section (4) or the end section (5) are arranged opposite one another in the radial direction (R) with respect to the axis of rotation (X', X") of the tool (1).

7. Tool according to any one of the preceding claims, **characterised in that** the chamfering tools (9, 10, 14, 15) are cutting plates.

8. Machine for producing roof ridge-shaped chamfers (28) on the teeth (21, 24) of an internally and externally toothed gearwheel (26), wherein the machine comprises a drive, which drives the gearwheel (26) to be machined during use so that it rotates about its axis of rotation (Y), **characterised in that** the machine comprises two tools (1', 1") designed according to any one of the preceding claims, at least one drive, which drives the tools (1', 1") during use so that they rotate about their respective axis of rotation (X', X"), and control devices, which are provided for adjusting the tools (1', 1") between a first working position, in which, having their chamfering tools (14, 15) seated on their end sections (5), they engage with the end faces (20) of one of the teeth (21) of the gearwheel (26), and a second working position, in which, having their chamfering tools (9, 10) seated on their middle sections (4), they engage with the end surfaces (23) of the other teeth (24) of the gearwheel (26).

9. Method for producing roof ridge-shaped chamfers (28) on the end faces (20, 23) of the teeth (21, 24) of an internal and external toothing (22, 25) of an internally and externally toothed gearwheel (26), wherein the method comprising the following steps:
- clamping two tools for producing roof ridge-shaped chamfers (28) on teeth (21, 24) of an internally and externally toothed gearwheel (26) respectively in a tool receptacle, wherein the tools (1', 1") comprise a finger-like tool carrier (2) having a holding section (3), which is associated with an end face of the tool carrier (2) and provided for fastening in a tool holder of a machine tool, and a chamfering tool chamfering tool (14, 15), which is held on the end section (5) of the tool carrier (2), said end section (5) being associated with the other end face, and during use describes an impact circle (S14, 15) with its cutting edge (14a, 15a), the diameter of said circle being determined by the radial distance of the cutting edge (14a, 15a) of the chamfering tool (14, 15) from the axis of rotation (X', X") of the tool (2). and wherein at least one further chamfering tool (9, 10) is attached in a middle section (4) of the tool carrier (2) which is offset relative to the end section (5) provided with the chamfering tool (14, 15) towards the holding section (3) of the tool carrier (2), said chamfering tool being held with its cutting edge (9a, 10a) at a radial distance to the axis of rotation (X', X") of the tool (1), said radial distance being greater than the radial distance of the cutting edge (14a, 15a) of the chamfering tool (14, 15) held on the end section (5) of the tool holder (2);
- adjusting the tools (1', 1") into a respective first working position, in which, having their chamfering tools (14, 15) seated on their end sections (5), they engage with the end faces (20) of one of the teeth (21) of the gearwheel (26),
and
- adjusting the tools remaining in their tool holder (1', 1") into a respective second working position, in which, having their chamfering tools (9_{;} 10) seated on their middle sections (4), they engage with the end faces (23) of the other teeth (24) of the gearwheel (26).

10. Method according to Claim 9, **characterised in that** the tools (1', 1") and their axes of rotation (X', X") are positioned and aligned with respect to the gearwheel (26) to be machined, such that when the tools (1', 1 ") are in their first working position, having their chamfering tools (14, 15) seated on their end sections (5), they engage with the end faces (20) of the teeth (21) of the internal toothing (22) of the gearwheel (26), and when they are in their second working position, having their chamfering tools (9, 10) seated on their middle sections (4), they engage with the end faces (23) of the teeth (24) of the external toothing (25).

11. Method according to Claim 9, **characterised in that** the tools (1', 1") and their axes of rotation (X', X") are positioned and aligned with respect to the gearwheel (26) to be machined such that, when the tools (1', 1") are in their first working position, having their chamfering tools (14, 15) seated on their end sections (5), they engage with the end faces (23) of the teeth (24) of the external toothing (25) of the gearwheel (26) and when they are in their second working position, having their chamfering tools (9, 10) seated on their middle sections (4), they engage with the end faces (20) of the teeth (21) of the internal toothing (22).

12. Method according to any one of Claims 9 to 11, **characterised in that** when the tools (1', 1") are in their second working position they are associated with the same quadrant (V3, V4) of the internal and external toothing (22,25) of the gearwheel (26) to be machined as in their first working position.

13. Method according to any one of Claims 9 to 12, **characterised in that** the tools (1', 1") are driven to rotate in opposite directions about their axis of rotation (X', X").

14. Method according to Claim 13, **characterised in that**, during the machining of the end faces (20) of the teeth (21) of the internal toothing (22), the direction of rotation of the tools (1', 1") is respectively opposite to the direction of rotation with which they rotate during the machining of the end faces (23) of the teeth (24) of the external toothing (25)

## Revendications

1. Outil pour la réalisation de pointes (28) en forme de faîte de toit au niveau de dents (21, 24) d'une roue dentée (26) à denture intérieure et extérieure, l'outil (1', 1 ") comportant
- un support d'outil (2) en forme de doigts avec une partie de maintien (3) qui est associée à une face avant du support d'outil (2) et qui est prévue pour la fixation dans un logement d'outil d'une machine-outil,
et
- un outil d'appointage (14, 15) qui est maintenu en la partie d'extrémité (5) du support d'outil (2) associée à l'autre face avant, et qui décrit, lors de l'utilisation, avec son bord de coupe (14a, 15a), un cercle de rotation (S14, 15), dont le diamètre est déterminé par la distance radiale du bord de coupe (14a, 15a) de l'outil d'appointage (14, 15) par rapport à l'axe de rotation (X', X") de l'outil (2),
au moins un autre outil d'appointage (9, 10) étant fixé dans une partie centrale (4) du support (2) d'outil qui est agencée de manière décalée par rapport à la partie d'extrémité (5) pourvue de l'outil d'appointage (14, 15), dans le sens vers la partie de maintien (3) du support (2) d'outil, l'autre outil d'appointage (9, 10) étant maintenu, avec son bord de coupe (9a, 10a), à une distance radiale par rapport à l'axe de rotation (X', X") de l'outil (1) qui est supérieure à la distance radiale du bord de coupe (14a, 15a) de l'outil d'appointage (14, 15) maintenu en la partie d'extrémité (5) du support (2) d'outil, **caractérisé en ce que**
la distance radiale du bord de coupe (9a, 10a) de l'outil d'appointage (9, 10), respectivement fixé dans une partie centrale (4) du support d'outil (2), par rapport à l'axe de rotation (X', X") est au moins 1,5 fois supérieure à la distance radiale du bord de coupe (14a, 15a) de l'outil d'appointage (14, 15), fixé respectivement dans la partie d'extrémité (5) du support d'outil (2), par rapport à l'axe de rotation (X', X").

2. Outil selon la revendication 1, **caractérisé en ce que** la partie centrale (4) est conçue en tant qu'épaulement sur lequel se trouve un logement pour l'autre outil d'appointage (9, 10).

3. Outil selon l'une des revendications précédentes, **caractérisé en ce que** la distance (A1) mesurée de façon axialement parallèle par rapport à l'axe de rotation (X', X") entre le bord de coupe (14a, 15a) de l'outil d'appointage (14, 15) maintenu en la partie d'extrémité (5) et le bord de coupe (9a, 10a) de l'outil d'appointage (9, 10) maintenu en la partie centrale (4) correspond au moins à 30 % de la distance (A2) mesurée également de façon axialement parallèle à l'axe de rotation (X', X") entre l'extrémité de la partie de maintien (3) associée à la partie centrale (4) et la face avant de la partie d'extrémité (5) du support d'outil (2) opposée à la partie de maintien (3).

4. Outil selon l'une des revendications précédentes, **caractérisé en ce qu'**au moins deux outils d'appointage (14, 15) sont fixés dans la partie d'extrémité (5) du support d'outil (2).

5. Outil selon l'une des revendications précédentes, **caractérisé en ce qu'**au moins deux outils d'appointage (9, 10) sont fixés dans la partie centrale (4).

6. Outil selon la revendication 3, **caractérisé en ce que** les outils d'appointage (9, 10, 14, 15) associés à la partie centrale (4) ou à la partie d'extrémité (5) sont agencés opposés l'un à l'autre en direction radiale (R) par rapport à l'axe de rotation (X', X") de l'outil (1).

7. Outil selon l'une des revendications précédentes, **caractérisé en ce que** les outils d'appointage (9, 10, 14, 15) sont des plaquettes de coupe.

8. Machine pour la réalisation de pointes (28) en forme de faîte de toit au niveau de dents (21, 24) d'une roue dentée (26) à denture intérieure et extérieure, la machine présentant un entraînement qui entraîne en rotation, lors de l'utilisation, la roue denté (26) à traiter autour de son axe de pivotement (Y), **caractérisée en ce que** la machine présente deux outils (1', 1") conçus selon l'une des revendications précédentes, au moins un entraînement, lequel entraîne en rotation les outils (1', 1"), lors de l'utilisation, autour de leur axe de rotation (X', X") respectif, et des dispositifs de réglage, lesquels sont prévus pour le déplacement des outils (1', 1") entre une première position de travail, dans laquelle ils entrent en prise avec leurs outils d'appointage (14, 15), logés dans leurs parties d'extrémité (5), avec les faces avant (20) desdits dents (21) de la roue dentée (26), et une deuxième position de travail, dans laquelle ils entrent en prise avec leurs outils d'appointage (9, 10), logés dans leurs parties centrales (4), avec les faces avant (23) des autres dents (24) de la roue dentée (26).

9. Procédé pour la réalisation de pointes (28) en forme de faîte de toit au niveau des faces avant (20, 23) des dents (21, 24) d'une denture intérieure et extérieure (22, 25), le procédé comportant les étapes de travail suivantes :
- serrage de deux outils pour la réalisation de pointes (28) en forme de faîte de toit au niveau de dents (21, 24) d'une roue dentée (26) à denture intérieure et extérieure dans respectivement un logement d'outil, les outils (1', 1") comportant un support d'outil (2) en forme de doigt avec une partie de maintien (3), laquelle est associée à une face avant du support d'outil (2) et qui est prévue pour la fixation dans un logement d'outil d'une machine-outil, et un outil d'appointage (14, 15), lequel est maintenu en la partie d'extrémité (5) du support d'outil (2) associée à l'autre face avant et qui décrit, lors de l'utilisation, avec son bord de coupe (14a, 15a) un cercle de rotation (S14, 15), dont le diamètre est déterminé par la distance radiale du bord de coupe (14a,15a) de l'outil d'appointage (14, 15) de l'axe de rotation (X', X") de l'outil (2), et, au moins un autre outil d'appointage (9, 10) étant fixé dans une partie centrale (4) du support d'outil (2), laquelle est agencée décalée par rapport à la partie d'extrémité (5), pourvue de l'outil d'appointage (14, 15), dans le sens vers la partie de maintien (3) du support d'outil (2), cet outil d'appointage (9, 10) étant maintenu, avec son bord de coupe (9a, 10a), à une distance radiale par rapport à l'axe de rotation (X', X") de l'outil (1) qui est supérieure à la distance radiale du bord de coupe (14a, 15a) de l'outil d'appointage (14, 15) maintenu en la partie d'extrémité (5) du support d'outil (2) ;
- déplacement des outils (1', 1 ") dans respectivement une première position de travail, dans laquelle ils entrent en prise avec leurs outils d'appointage (14, 15), logés dans leurs parties d'extrémité (5), avec les faces avant (20) desdits dents (21) de la roue dentée (26), et
- déplacement des outils (1', 1") restant dans leur logement d'outil dans respectivement une deuxième position de travail, dans laquelle ils entrent en prise avec leurs outils d'appointage (9, 10), logés dans leurs parties centrales (4), avec les faces avant (23) des autres dents (24) de la roue dentée (26).

10. Procédé selon la revendication 9, **caractérisé en ce que** les outils (1',1") et leurs axes de rotation (X', X") sont positionnés et orientés par rapport à la roue dentée (26) à traiter de sorte que les outils (1',1") entrent en prise, dans leur première position de travail, avec leurs outils d'appointage (14, 15), logés dans leurs parties d'extrémité (5), avec les faces avant (20) des dents (21) de la denture intérieure (22) de la roue dentée (26) et ils entrent en prise, dans leur deuxième position de travail, avec leurs outils d'appointage (9, 10), logés dans leurs parties centrales (4), avec leurs faces avant (23) des dents (24) de la denture extérieure (25).

11. Procédé selon la revendication 9, **caractérisé en ce que** les outils (1', 1") et leurs axes de rotation (X', X") sont positionnés et orientés par rapport à la route dentée (26) à traiter de sorte que les outils (1', 1") entrent en prise, dans leur première position de travail, avec leurs outils d'appointage (14, 15), logés dans leurs parties d'extrémité (5), avec les faces avant (23) des dents (24) de la denture extérieure (25) de la roue dentée (26) et ils entrent en prise, dans leur deuxième position de travail, avec leurs outils d'appointage (9, 10), logés dans les parties centrales (4), avec les faces avant (20) des dents (21) de la denture intérieure (22).

12. Procédé selon l'une des revendications 9 à 11, **caractérisé en ce que** les outils (1', 1") sont associés, dans leur deuxième position de travail, au même quart de cercle (V3, V4) de la denture intérieure et extérieure (22, 25) de la roue dentée (26) à traiter comme dans leur première position de travail.

13. Procédé selon l'une des revendications 9 à 12, **caractérisé en ce que** les outils (1', 1") sont entrainés en rotation en sens opposés autour de leur axe de rotation (X', X").

14. Procédé selon la revendication 13, **caractérisé en ce que** la direction de pivotement des outils (1', 1"), lors de l'usinage des faces avant (20) des dents (21) de la denture intérieure (22), est respectivement opposée par rapport à la direction de pivotement, avec laquelle ils tournent lors de l'usinage des faces avant (23) des dents (24) de la denture extérieure (25).
